Europäisches Patentamt

European Patent Office

Office européen des brevets

(11) Numéro de publication: **0 200 666 B1**

# FASCICULE DE BREVET EUROPEEN

(45) Date de publication de fascicule du brevet: **23.09.92**  (51) Int. Cl.5: **F16L 37/08**

(21) Numéro de dépôt: **86460009.3**

(22) Date de dépôt: **28.04.86**

(54) **Dispositif de raccordement instantané pour tubes en matières plastique et métallique.**

(30) Priorité: **29.04.85 FR 8506627**

(43) Date de publication de la demande:
**05.11.86 Bulletin  86/45**

(45) Mention de la délivrance du brevet:
**23.09.92 Bulletin  92/39**

(84) Etats contractants désignés:
**DE GB IT SE**

(56) Documents cités:
**DE-A- 3 018 077
FR-A- 2 227 483
US-A- 2 069 377
US-A- 2 465 197
US-A- 3 837 687**

(73) Titulaire: **LEGRIS
29 rue de La Palestine
F-35000 Rennes(FR)**

(72) Inventeur: **Legris, André
18 rue des Professeurs Pellé
F-35000 Rennes(FR)**

(74) Mandataire: **Dubreuil, Annie et al
Cabinet Ballot-Schmit, Immeuble Le Suffren,
23 rue des Peupliers
F-56100 Lorient(FR)**

EP 0 200 666 B1

## Description

La présente invention a pour objet un dispositif de raccordement pour tubes en matière plastique et métallique comportant des moyens de raccordement assurant instantanément l'accrochage et l'étanchéité des conduits ou accessoires dès leur introduction par simple poussée dans le raccord. La déconnection des dits conduits est également instantanée par poussée sur un organe aménagé à cet usage.

Ce type de raccordement instantané est bien connu, ayant fait l'objet de plusieurs brevets français (2.012.796, 2.319.833, 2.258.585, 2.479.406 et, notamment, le brevet 2 227 483 qui concerne un dispositif de raccordement capable de résister à des efforts importants de traction sur le tube, sans risque d'extrusion de ce dernier), brevets appartenant au déposant et se situant dans le domaine de la connection en automatisation pneumatique. Des moyens destinés à recevoir des outils de montage sont décrits, mais ceux-ci agissent sur une portion d'arc de cercle très réduite, ce qui peut poser dos problèmes au niveau des efforts de démontage.

La présente invention se rapporte plus particulièrement aux conduits en matière plastique, par exemple en polyéthylène réticulé, utilisés pour la distribution d'eau chaude et froide sanitaire ainsi qu'à celle du chauffage central dans le bâtiment. Les raccords instantanés pour la dite application sont très peu nombreux, il existe des raccords dont la pièce de tenue du conduit est une bague élastique fendue obtenue parfois par découpe, roulage ou emboutissage accrochant le tube tout en s'aggripant dans une enveloppe intérieure circulaire du corps de raccord ou coulissant librement dans cette enveloppe, toutefois cette sorte de raccordement pour l'application plus particulièrement visée ci-dessus permet le montage du tube instantanément mais son démontage est non instantané.

La plupart des systèmes de raccordement actuellement sur le marché sont des systèmes traditionnels à montage et à démontage non instantanés. Ce sont pour la plupart des raccords comportant 4 organes: le corps formant l'enveloppe du raccord, une bague de compression pour la tenue et l'étanchéité du tube un écrou de serrage et une fourrure destinée à soutenir le tube dans son diamètre intérieur le tout en laiton.

Ces raccords traditionnels ne répondent plus aux conditions exigées pour leur utilisation dans les installations de distribution d'eau par tubes en matière plastique car économiquement ils demandent une mise en oeuvre trop longue et coûteuse qui n'est pas tolérable actuellement en particulier dans le créneau des maisons industrialisées.

La présente invention concerne un dispositif de raccordement pour conduits en matière plastique et métalliques véhiculant un fluide et plus spécifiquement de l'eau froide et chaude et dans lequel le dit tube est monté instantanément par une simple poussée dans des moyens le rendant indémontable, ceux-ci pouvant libérer instantanément le dit tube par une simple poussée sur un organe adéquat.

Le dispositif de raccordement est constitué d'une enveloppe formant contenant muni d'au moins un moyen femelle de raccordement instantané et d'au plus un moyen fileté de fixation des dits moyens pouvant être combinés avec des organes de montage sur un appareil ou sur un conduit.

Le dispositif suivant l'invention possède une enveloppe à l'intérieur de laquelle plusieurs surfaces cylindriques concentriques reçoivent chacune des organes coopérant à la bonne réalisation de la connection du conduit. Le moyen d'accrochage circulaire élastique du conduit contenu dans un des logements cylindriques intérieurs de l'enveloppe est disposé dans un espace permettant le débattement nécessaire au dégagement des éléments aménagés pour l' accrochage du conduit lors du démontage dudit conduit, un organe antagoniste évite le retournement des éléments des susdits accrochages lorsque la connection du conduit est réalisée; cette disposition garantit l'efficacité de la connexion. Dans un second logement cylindrique intérieur de l'enveloppe logeant le moyen d'accrochage circulaire élastique du conduit par sa partie circulaire extérieure un aménagement annulaire évite le recul du susdit moyen d'accrochage le rendant emprisonné à l'intérieur de l'enveloppe.

Conformément à la présente invention, le moyen femelle de raccordement instantané comporte sur son enveloppe extérieure et en bout ou dans un de ses alésages intérieurs recevant un organe adéquat, des formes aménagées permettant l'adaptation de moyens de démontage de conduits instantanément.

Ces dits moyens sont indépendants du raccord par mesure de sécurité pour éviter les démontages intempestifs qui seraient dangereux à toute certitude de bonne connexion, c'est une caractéristique de l'invention.

Plus précisément, selon l'invention, dans un ensemble comprenant un dispositif de raccordement pour tubes en matière plastique ou métalliques véhiculant un fluide comprimé, ainsi qu'un tel tube, dans lequel ce tube est monté instantanément par une simple poussée dans un orifice du raccord comportant intérieurement un joint d'étanchéité, une bague d'accrochage du tube avec des pattes d'accrochage, à laquelle est associée une bague de soutien servant à éviter le retournement des pattes d'accrochage à la mise en pression du dispositif ainsi qu'à réaliser l'écartement desdites pattes d'accrochage lors de la déconnexion du tube du fait d'être poussées vers l'intérieur du raccord, le dispositif de raccordement comprend :

- un organe de poussée en forme de bague se trouvant au moins partiellement dans le raccord et qui, par un déplacement axial vers l'intérieur du raccord, assure la déconnexion du tube par poussée vers l'intérieur dudit élément de soutien,
- des moyens de guidage hélicoïdaux à la périphérie de l'enveloppe cylindrique du raccord,
- un élément de démontage en forme de bague, qui se place en bout du raccord et est engageable avec l'extrémité de l'organe de poussée, et qui est ouvert longitudinalement par une fente, pour permettre son passage autour d'un tube, et
- des moyens sur l'élément de démontage ou l'organe de poussée, complémentaires desdits moyens de guidage hélicoïdaux, engageables avec eux pour former une liaison de type vis-écrou ou équivalent n'autorisant que des mouvements relatifs conjugués de rotation et de translation longitudinale, en vue de transformer un mouvement de rotation imprimé à l'élément de démontage en un mouvement axial de l'ensemble formé par l'élément de démontage engagé avec l'organe de poussée,

de sorte que l'élément de démontage répond à la double exigence, de pouvoir être placé sur le raccord juste au moment choisi pour le démontage, et d'exercer son action, en fonctionnement, sur la plus grande partie de la circonférence à l'extrémité de l'organe de poussée.

L'élément de démontage peut s'adapter soit sur l'enveloppe extérieure du corps du raccord, soit sur des composants disposés dans ledit corps.

L'invention, plus particulièrement destinée aux dispositifs d'alimentation en eau dans le bâtiment, n'est pas limitée à cette utilisation et peut convenir également à tous les circuits de fluides à moyenne pression qui est limitée par la résistance des tubes en matière plastique.

D'autres caractéristiques et avantages de l'invention seront mieux compris à la lecture de la description qui va suivre de plusieurs modes de réalisation et en se référant aux dessins annexés dans lesquels :

la figure 1 est une vue en élévation et en coupe axiale d'un mode de réalisation suivant l'invention,

la figure 2 est une vue en élévation de la figure 1,

la figure 3 est une vue en coupe radiale de la figure 1,

la figure 4 est une vue en coupe axiale d'un système de déconnection de la figure 1.

la figure 5 est une vue en bout de la figure 4.

la figure 6 est une vue en élévation et en coupe axiale d'un autre mode de réalisation suivant l'invention avec déverrouillage par came intérieur.

la figure 7 est une vue extérieure sans enveloppe du mode de réalisation de la figure 6.

la figure 8 est une vue en coupe axiale d'un système de déconnection de la figure 6.

la figure 9 est une vue en élévation et en coupe d'un autre mode de réalisation suivant l'invention avec déverrouillage par filetage extérieur.

la figure 10 est une vue en coupe axiale d'un système de déconnection de la figure 9.

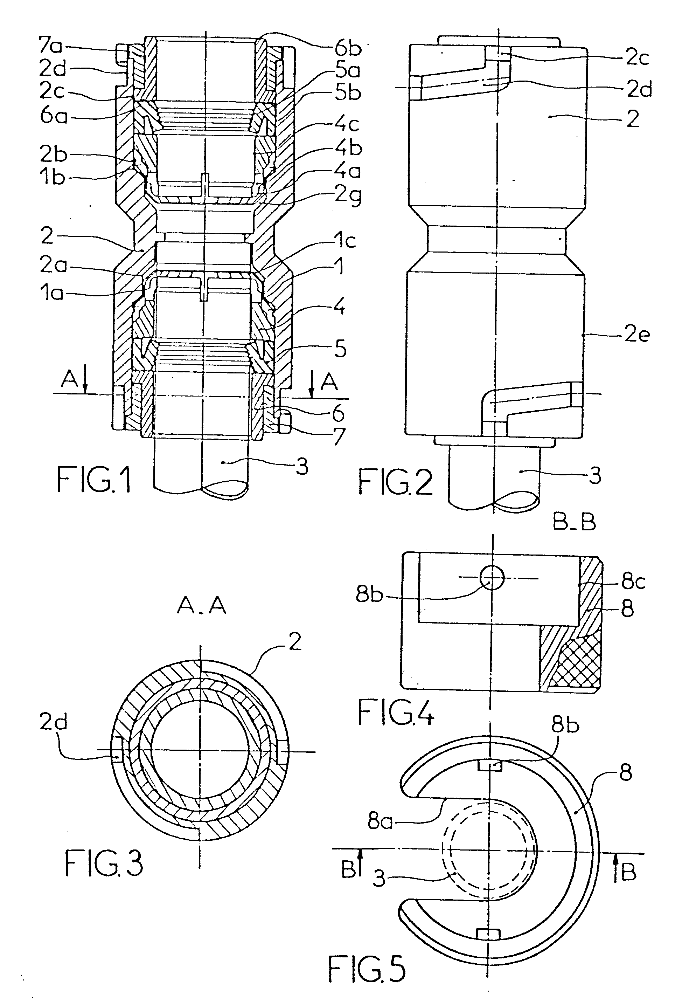

A la figure 1 on a représenté un dispositif de raccordement possédant des moyens de tenue, d'étanchéité et de démontage du conduit dans lequel un élément d'accrochage du tube 1 centré par son pourtour circulaire 1a dans un logement lui même circulaire 2a du corps 2 immobilisé en translation par son plus grand diamètre extérieur 1b contre un bossage annulaire 2b aménagé dans le logement circulaire 2e de ce dit corps 2 assuré par plusieurs pattes d'accrochage 1c la tenue du conduit 3 dans le raccord.

Une bague de soutien 4 disposée dans le logement circulaire 2e à l'arrière de l'élément d'accrochage 1 évite par sa partie avant 4a le retournement des pattes d'accrochage 1c lors de la mise sous pression du dispositif tout en favorisant l'écartment des susdits pattes d'accrochage 1e dans l'espace 2g lors de la déconnection du conduit 3, cette bague de soutien 4 en matière plastique rendue souple à l'une de ses extrémités par plusieurs fentes 4b qui lui confèrent par son orifice intérieur 4c une possibilité de serrage sur le conduit 3 favorisant par entraînement lors du passage de ce dit conduit l'écartement des pattes d'accrochage 1c.

L'étanchéité du tube 3 est assuré par la zone 5a d'un joint à lèvre 5 situé dans le logement cylindrique 2c du corps 2, l'étanchéité extérieure du raccord étant réalisé par la zone 5b de ce dit joint dont la face annulaire de contact contre celle de l'organe 6 en 6a augmente la pression de la zone d'étanchéité 5a lorsque le dispositif est en fonctionnement normal sous pression.

L'élément de poussée 6 coulissant respectivement dans les logements 2c et 7a du corps 2 et du bouchon 7 rendu solidaire de l'enveloppe 2 par ultra sons ou friction, est l'organe de transmission de l'effort de démontage du conduit 3.

Sur l'enveloppe circulaire extérieure du corps 2 est aménagé au moins une rampe hélicoïdale de section rectangulaire 2d permettant à un élément de démontage de venir se positionner à l'intérieur qui par un mouvement de rotation se déplace en translation exerçant un effort axial cet élément est une caractéristique importante faisant l'objet de cette invention, sur la face 6b de l'élément de poussée 6. Ce dit effort se répercute successivement sur le joint à lèvre 5 et sur l'organe de soutien 4 qui soulève les pattes d'accrochage le de l'élément 1 provoquant la déconnection du conduit 3.

La figure 2 représente plusieurs rampes hélicoïdales 2d à l'intérieur desquelles l'élément de démontage se déplace dans ces dites rampes qui sont ouvertes sur la face 2c de l'enveloppe 2 pour l'introduction du susdit élément.

La figure 3 représente le positionnement angulaire des rampes 2d aménagées sur la périphérie de l'enveloppe 2 l'inclinaison de l'hélice pourrait permettre la réversibilité de la rotation de l'élément de démontage.

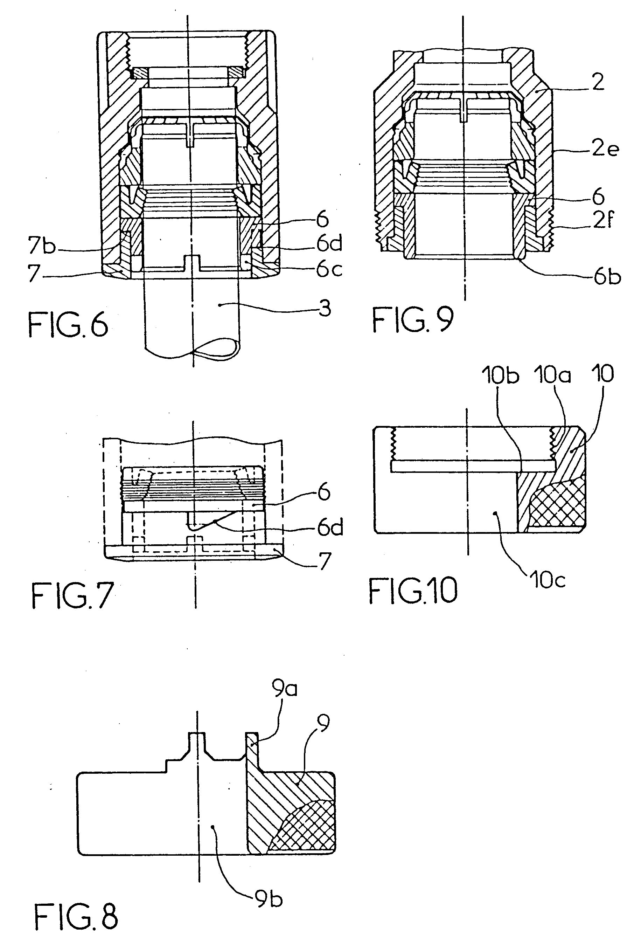

Aux figures 4 et 5 est représenté l'élément de démontage 8 dans lequel est aménagé une échancrure 8a permettant le passage de cet élément autour du conduit 3 les 2 ergots 8b sont destinés à venir coulisser dans les rampes 2d des figures 1, 2 et 3, pendant la rotation nécessaire au démontage du conduit de ce dit élément de démontage qui est guidé dans son logement intérieur cylindrique 8c par la tubulure cylindrique extérieure du raccord 2.

La figure 6 représente un autre dispositif de raccordement dont les aménagements nécessaires à la prise de commande de l'élément de démontage indépendant sont disposés circulairement sur le poussoir 6 sous forme de crans rectangulaires évidés 6c. Ce dit poussoir sous l'effet d'une certaine rotation angulaire provoquée par l'élément de démontage se déplace également en translation par l'intermédiaire d'au moins un élément de came 6d dont les contre formes sont disposées en 7b dans le bouchon 7 cet élément est une caractéristique importante faisant l'objet de cette invention provoquant une poussée axiale sur le joint à lèvre 5 et la bague de soutien 4 qui soulève les pattes d'accrochage 1c de l'élément 2 entraînant la déconnection du conduit 3.

La figure 7 représente la disposition d'une des cames 6d autour de l'élément de poussée leur inclinaison pourrait permettre la réversibilité de la rotation de l'élément de démontage.

La figure 8 représente l'élément de démontage indépendant 9 sur lequel sont disposés circulairement plusieurs ergots 9a destinés à entraîner en rotation l'élément de poussée 6 par ses encoches 6c lors de la déconnection du conduit 3. L'échancrure 9b permet le passage autour dudit conduit 3.

La figure 9 représente un autre dispositif de raccordment dont les aménagements nécessaires à la prise de commande de l'élément de démontage indépendant se traduisent par un filetage extérieur 2f disposé sur l'enveloppe circulaire extérieure 2e du corps 2 le susdit élément de démontage agit par rotation comme un écrou prenant appui sur la face 6b qui par son mouvement de rotation se déplace en translation exerçant un effort axial sur la dite face 6b celui-ci se répercutant successivement sur le joint à lèvre 5 et sur l'organe de soutien 4 qui soulève les pattes d'accrochage 1c de l'élément 1 provoquant la déconnection du conduit 3.

La figure 10 représente un élément de démontage indépendant 10 possédant un orifice taraudé 10a se vissant sur le filetage extérieur 2f de l'enveloppe 2 dont la face 10b prend appui sur l'extrémité 6b du poussoir 6 pour déconnecter le conduit 3, l'échancrure 10c permet le passage autour dudit conduit.

La présente invention trouve spécialement son application dans les montages à effectuer très rapidement pour les circuits d'eau dans le batiment et pour tous les fluides véhiculés dans les industries à des pressions allant du vide à 20 bars avec des conduits en matière plastique de qualité ou métalliques.

**Revendications**

1. Ensemble comprenant un dispositif de raccordement pour tubes en matière plastique ou métalliques véhiculant un fluide comprimé, ainsi qu'un tel tube, dans lequel ce tube est monté instantanément par une simple poussée dans un orifice du raccord comportant intérieurement un joint d'étanchéité (5), une bague d'accrochage (1) du tube, avec des pattes d'accrochage (1a), à laquelle est associée une bague de soutien (4) servant à éviter le retournement des pattes d'accrochage à la mise en pression du dispositif ainsi qu'à réaliser l'écartement desdites pattes d'accrochage lors de la déconnexion du tube du fait d'être poussées vers l'intérieur du raccord, ledit dispositif comprenant :

   - un organe de poussée (6) en forme de bague se trouvant au moins partiellement dans le raccord (2) et qui, par un déplacement axial vers l'intérieur du raccord, assure la déconnexion du tube par poussée vers l'intérieur dudit élément de soutien (4),

   - des moyens de guidage hélicoïdaux à la périphérie de l'enveloppe cylindrique (2) du raccord,

   - un élément de démontage (8 ou 9 ou 10) en forme de bague, qui se place en bout du raccord et est engageable avec l'extrémité de l'organe de poussée (6), et qui est ouvert longitudinalement par une fente, pour permettre son passage autour d'un tube (3), et

- des moyens sur l'élément de démontage ou l'organe de poussée, complémentaires desdits moyens de guidage hélicoïdaux, engageables avec eux pour former une liaison de type vis-écrou ou équivalent n'autorisant que des mouvements relatifs conjugués de rotation et de translation longitudinale, en vue de transformer un mouvement de rotation imprimé à l'élément de démontage en un mouvement axial de l'ensemble formé par l'élément de démontage engagé avec l'organe de poussée,

de sorte que l'élément de démontage répond à la double exigence, de pouvoir être placé sur le raccord juste au moment choisi pour le démontage, et d'exercer son action, en fonctionnement, sur la plus grande partie de la circonférence à l'extrémité de l'organe de poussée.

2. Ensemble selon la revendication 1, caractérisé en ce que lesdits moyens de guidage hélicoïdaux se trouvent sur la périphérie externe de l'enveloppe cylindrique (2), et en ce que les moyens complémentaires des moyens de guidage hélicoïdaux se trouvent sur la paroi interne cylindrique de l'élément de démontage (8) qui comporte en outre une paroi d'extrémité destinée à s'appuyer contre l'extrémité de l'organe de retenue (6), et présentant une échancrure (8a) ouverte dans ladite fente longitudinale, pour le passage de l'élément autour d'un tube (3).

3. Ensemble selon la revendication 1, caractérisé en ce que lesdits moyens de guidage hélicoïdaux sont à la périphérie interne de l'enveloppe cylindrique (2), en ce que les moyens complémentaires des moyens de guidage hélicoïdaux se trouvent sur la paroi externe de l'organe de poussée (6), et en ce que l'extrémité de celui-ci comporte plusieurs évidements rectangulaires (6c) régulièrement disposés sur le pourtour, ces évidements étant destinés à recevoir des crans complémentaires (9a) à une extrémité de l'élément de démontage (9).

4. Ensemble selon la revendication 3, caractérisé en ce que lesdits moyens de guidage hélicoïdaux sont des cames hélicoïdales (7b) aménagées circulairement dans un bouchon (7) solidaire du corps (2), et en ce que les moyens complémentaires des moyens de guidage hélicoïdaux sont des cames (6d) à la périphérie externe de l'organe de poussée (6).

5. Ensemble selon l'une des revendications 1 à 4, caractérisé en ce que l'élément d'accrochage élastique de tube (1) est maintenu sans jeu axial dans le raccord, par sa partie circulaire extérieure (1b) et un aménagement annulaire (2b) se situant dans le logement intérieur (2c) de l'enveloppe (2) du raccord.

6. Ensemble selon l'une des revendications 1 à 5, caractérisé en ce que l'organe de soutien (4) coopérant avec l'élément d'accrochage (1) pour en soulever les pattes d'accrochage (1c) lors d'un mouvement axial vers l'intérieur dans le raccord, est prévu de manière à entourer un tube (3) introduit dans le raccord avec un serrage adéquat créé par l'intermédiaire de sa partie fendue (4b), afin de favoriser le passage du tube (3) dans les pattes d'accrochage (1c) du fait de leur soulèvement.

7. Ensemble selon l'une des revendications 1 à 6, caractérisé en ce que l'organe de soutien (4), par son extrémité circulaire conique (4a), évite aux pattes d'accrochage (1c) de l'élément (1) de se retourner, tout en favorisant la déconnexion de tube.

8. Ensemble selon l'une des revendications 1 à 7, caractérisé en ce que l'écartement des pattes (1c) de l'élément (1) est limité par la surface annulaire (2g) de l'enveloppe (2) du raccord, afin d'éviter leur détérioration.

9. Ensemble selon l'une des revendications 1 à 8, caractérisé en ce qu'il comprend un élément d'étanchéité (5) possédant une partie souple (5a) destinée à l'étanchéité du tube (3) et une partie souple (5b) destinée à l'étanchéité extérieure du raccord (2), étanchéités qui, en service, s'accroissent avec la pression.

**Claims**

1. An assembly comprising a connecting device for tubes of synthetic resin or of metal for a compressed fluid and furthermore such a tube, in which such tube is instantaneously connected by a simple thrusting movement into a connection opening which on the inside has a sealing joint (5), an interlocking ring (1) for the tube, with interlocking claws (1a) with which a support ring (4) is associated functioning to prevent turning over of the interlocking claws when the device is put under pressure and to cause a disengagement of the interlocking claws at the time of disconnection of the tube by virtue of their being thrust towards the inside of the connection, the said device comprising:

- a thrust member (6) in the form of a ring located at least partly in the connection (2) and which, by virtue of an axial displacement into the interior of the connection, ensures disconnection of the tube by a thrust into the inside of the said support element (4),
- helical guide means on the periphery of the cylindrical outer surface (2) of the connection,
- a disconnecting element (8 or 9 or 10) in the form of a ring, which is located at the end of the connection and is adapted to be engaged with the end of the thrust member (6) and which is longitudinally open owing to its having a slot in order to enable it to be fitted around a tube (3), and
- means on the disconnecting element or on the thrust member complementary to the said helical guide means and adapted to be engaged with them in order to constitute a coupling of the screw and nut type or an equivalent only permitting conjugated relative longitudinal movements in rotation and translation in order to transform a rotary movement acting on the disconnecting element into an axial movement of the assembly constituted by the disconnecting element in engagement with the thrust member,

in such a manner that the disconnecting element meets the double requirement of being able to be placed on the connection just at the time selected for disconnecting and of exerting its action while functioning on the major part of the circumference at the end of the thrust member.

2. The assembly as claimed in claim 1, characterized in that the said helical guide means are arranged on the external periphery of the cylindrical outer surface (2) and in that the complementary means of the helical guide means are arranged of the inner cylindrical wall surface of the disconnecting element (8) which comprises furthermore an end wall adapted to rest against the end of the retaining member (6) and having a recess (8a) opening into the said longitudinal slot for the fitting of the element around a tube (3).

3. The assembly as claimed in claim , characterized in that the said helical guide means are on the internal periphery of the cylindrical outer surface (2), in that the complementary means of the helical guide means are arranged the external wall surface of the thrust member (6), and in that the end of the latter comprises a plurality of rectangular recesses (6c) which are regularly arranged on the circumferential extent, said recesses being adapted to have complementary notches (9a) at one end of the disconnecting element (9).

4. The assembly as claimed in claim 3, characterized in that the said helical guide means include helical cams (7b) arranged circularly in a plug (7) integral with the member (2) the in that the complementary means of the helical guide means include cams (6d) at the external periphery of the thrust member (6).

5. The assembly as claimed in any one of the preceding claims 1 through 4, characterized in that the interlocking elastic element for the tube (1) is maintained without any axial play in the connection by its external circular part (1b), an annular means (2b) being arranged in the internal socket (2c) of the outer surface (2) of the connection.

6. The assembly as claimed in any one of the preceding claims 1 through 5, characterized in that the support member (4), which is in cooperation with the interlocking element (1) in order to clear the interlocking claws (1) thereof at the time of an axial movement into the interior of the connection, is provided in such a manner that it surrounds a tube (3) introduced into the connection with an adequate gripping effect produced by the intermediary of its split part (4b) in order to facilitate the passage of the tube (3) into the interlocking claws (1c) owing to their being lifted.

7. The assembly as claimed in any one of the preceding claims 1 through 6, characterized in that the support member (4), acting by means of its conical circular end (4a), prevents the interlocking claws (1c) of the element (1) from turning over while nevertheless facilitating the disconnection of the tube.

8. The assembly as claimed in any one of the preceding claims 1 through 7, characterized in that the clearance of the claws (1c) of the element (1) is limited by the annular surface (2g) of the outer surface (2) of the connection in order to prevent them being worn.

9. The assembly as claimed in any one of the preceding claims 1 through 8, characterized in that it comprises a sealing element (5) possessing a flexible part (5a) adapted to seal against the tube (3) and a flexible part (5b) adapted to seal against the outside of the connection (2), such sealing action increasing during operation with the pressure.

**Patentansprüche**

1.  Aufbau, der eine Anschlußvorrichtung für Rohre aus Kunststoff oder Metall, die ein unter Druck stehendes Strömungsmittel befördern, sowie ein solches Rohr enthält und bei welchem das Rohr schnellmontiert ist, nämlich durch einfaches Einschieben in eine Anschlußöffnung, die im Inneren eine Dichtung (5) und einen Kupplungsring (1) des Rohrs mit Kupplungsklauen (1a) aufweist, welchem ein Stützring (4) zugeordnet ist, der dazu dient, ein Schwenken der Kupplungsklauen beim Unter-Druck-Setzen der Vorrichtung zu vermeiden sowie einen Abstand der Kupplungsklauen beim Herausziehen des in das Innere des Anschlusses eingeschobenen Rohrs herzustellen, wobei die Vorrichtung aufweist:
    - ein ringförmiges Einschubelement (6), das wenigstens teilweise in dem Anschluß (2) liegt und welches bei einer Axialverschiebung in Richtung auf das Innere des Anschlusses das Herausziehen des Rohrs durch Schub gegen das Innere des genannten Stützelements (4) ermöglicht,
    - schraubenförmige Führungsmittel am Umfang der zylindrischen Hülle (2) des Anschlusses,
    - einen ringförmigen Abzieher (8, 9 oder 10), der am Ende des Anschlusses angeordnet ist, am Ende des Einschubelements (6) angreifen kann und der in Längsrichtung aufgrund eines Schlitzes offen ist, der ihn um ein Rohr (3) herum anbringbar macht, und
    - Mittel am Abzieher oder an dem Einschubelement, welche zu den schraubenförmigen Führungsmitteln komplementär sind und an ihnen angreifen können, um eine Verbindung nach Art einer Schraube mit Mutter oder etwas Vergleichbares zu bilden, die nur mit einer Drehung und einer Längsverschiebung verknüpfte Relativbewegungen zuläßt, zu dem Zweck, eine dem Abzieher verliehene Drehbewegung in eine Axialbewegung des durch den am Einschubelement angreifenden Abzieher gebildeten Aufbaus zu verwandeln,

    so daß der Abzieher den beiden Anforderungen genügt, gerade in dem zum Lösen des Anschlusses gewählten Moment zur Stelle zu sein und seine Wirkung bei Tätigkeit über dem größten Teil des Umfangs am Ende des Einschubelements auszuüben.

2.  Aufbau nach Anspruch 1, dadurch gekennzeichnet, daß sich die schraubenförmigen Führungsmittel auf dem äußeren Umfang der zylindrischen Hülle (2) befinden und daß sich die zu den schraubenförmigen Führungsmitteln komplementären Mittel auf einer zylindrischen Innenwand des Abziehers (8) befinden, welcher eine äußere Endwand trägt, die dazu dient, sich gegen das Ende des Halteelements (6) abzustützen, und welcher einen bogenförmigen Ausschnitt (8a) aufweist, der sich in den Längsschlitz öffnet, der das Element um das Rohr (3) herum anbringbar macht.

3.  Aufbau nach Anspruch 1, dadurch gekennzeichnet, daß sich die schraubenförmigen Führungsmittel am inneren Umfang der zylindrischen Hülle (2) befinden, daß sich die zu den schraubenförmigen Führungsmitteln komplementären Mittel auf einer Außenwand des Einschubelements (6) befinden und daß dessen Ende mehrere regelmäßig am Umfang verteilte rechtwinklige Aussparungen (6c) trägt, welche als Aufnahme für komplementäre Rasten (9a) an einem Ende des Abziehers (9) dienen.

4.  Aufbau nach Anspruch 4, dadurch gekennzeichnet, daß die schraubenförmigen Führungsmittel schraubenförmige Nocken (7b) sind, die kreisförmig in einem fest mit dem Körper (2) verbundenen Deckel (7) eingerichtet sind, und daß die zu den schraubenförmigen Führungsmitteln komplementären Mittel Nokken (6d) am äußeren Umfang des Einschubelements (6) sind.

5.  Aufbau nach einem der Ansprüche 1 bis 4, dadurch gekennzeichnet, daß das elastische Kupplungselement des Rohrs (1) ohne Axialspiel in dem Anschluß gehalten ist, nämlich durch seinen kreisförmigen Endteil (1b) und durch eine ringförmige Führung (2b), die in einer inneren Aufnahme (2c) der Hülle (2) des Anschlusses sitzt.

6.  Aufbau nach einem der Ansprüche 1 bis 5, dadurch gekennzeichnet, daß das Stützelement (4), das durch Anheben der Kupplungsklauen (1c) bei einer Axialbewegung in Richtung auf das Innere des Anschlusses mit dem Kupplungselement (1) zusammenwirkt, dafür vorgesehen ist, daß es ein Rohr (3) umgibt, das mit einer mittels seines geschlitzten Teils (4b) erzeugten angemessenen Klemmung in den Anschluß eingeführt ist, um den Durchgang des Rohrs (3) in den von ihm angehobenen Kupplungsklauen (1c) zu fördern.

7. Aufbau nach einem der Ansprüche 1 bis 6, dadurch gekennzeichnet, daß das Stützelement (4) aufgrund seines kreisförmigen kegelstumpfförmigen Endes (4a) den Kupplungsklauen (1c) des sich zurückziehenden Elements (1) ausweicht, wobei das Lösen des Rohrs insgesamt gefördert ist.

8. Aufbau nach einem der Ansprüche 1 bis 7, dadurch gekennzeichnet, daß der Abstand der Klauen (1c) des Elements (1) durch eine ringförmige Fläche (2g) der Hülle (2) des Anschlusses begrenzt ist, um ihre Beschädigung zu vermeiden.

9. Aufbau nach einem der Ansprüche 1 bis 8, dadurch gekennzeichnet, daß er ein Dichtelement (5) enthält, das einen nachgiebigen Teil (5a), der als Abdichtung des Rohrs (3) dient, und einen nachgiebigen Teil (5b) besitzt, der als äußere Abdichtung des Anschlusses (2) dient, der sich im Betrieb zunehmend mit dem Druck abdichtet.

FIG.1

FIG.2

B_B

A_A

FIG.4

FIG.3

FIG.5

FIG.6

7b

7

6

6d

6c

3

FIG.9

2

2e

6

2f

6b

FIG.7

6

6d

7

FIG.10

10b  10a  10

10c

FIG.8

9a

9

9b